# EUROPÄISCHE PATENTSCHRIFT

(11) **EP 0 359 150 B1**
(45) Veröffentlichungstag und Bekanntmachung des Hinweises auf die Patenterteilung: **02.11.1994**
(21) Anmeldenummer: 89116672.0
(22) Anmeldetag: 08.09.1989
(51) Int. Cl.: G01C 21/20

(54) **Fahrzeugpositions-Anzeigeeinrichtung**
Vehicle position display device
Dispositif d'affichage de la position d'un véhicule

(30) Priorität: 13.09.1988 DE 3831166
(43) Veröffentlichungstag der Anmeldung: 21.03.1990
(73) Patentinhaber: Bayerische Motoren Werke Aktiengesellschaft, 80788 München (DE)
(72) Erfinder: Steins, Wilfried, D-8045 Ismaning (DE); Weishaupt, Walter, D-8000 München 60 (DE)

(56) Entgegenhaltungen:
- EP-A- 0 194 802
- EP-A- 0 218 273
- GB-A- 2 180 066
- US-A- 4 032 758
- BOSCH TECHNISCHE BERICHTE, Bd. 8, Nr. 1/2, 1986, BOSCH, Stuttgart, DE, Seiten 7-14; Neukirchner et al.: 'EVA - Ein autarkes Ortungs-und Navigationssystem für Landfahrzeuge'

## Beschreibung

Die Erfindung bezieht sich auf ein Verfahren nach dem Oberbegriff des Patentanspruchs 1.

Derartige Anzeigeeinrichtungen sind allgemein bekannt und dienen dazu, die Position und/oder Fahrtroute eines Fahrzeugs anzuzeigen. Diese Anzeige wird auf unterschiedliche optische, akustische oder dergleichen Weise vorgenommen.

Verfahren der eingangs genannten Art verwenden in der Regel eine Recheneinheit, die die Ausgangssignale eines Fahrtweg-Gebers und eines Fahrtrichtungs-Gebers ständig miteinander in Beziehung setzt und daraus die jeweilige auszugebende Information gewinnt. Insbesondere im Stadtverkehr mit häufig wechselnden und nicht hervorsehbaren Einflüssen ist jedoch insbesondere die Arbeitsweise des Fahrtrichtungs-Gebers problematisch. Handelt sich dabei um einen Lenkwinkel-Geber, so ist aufgrund der vielfältigen Lenkwinkeländerungen, die bei völlig unterschiedlichen Geschwindigkeiten durchgeführt werden, ein erheblicher Fehler wahrscheinlich. Er läßt sich nur mit Hilfe von weiteren Parametern, insbesondere der Berücksichtigung der Fahrzeuggeschwindigkeit, der Fahrzeugbeschleunigung usw. sowie einer entsprechend hohen Auflösung des Fahrtweg-Gebers eliminieren. Dies führt, wie ohne weiteres erkennbar, zu einem erheblichen Aufwand.

Handelt es sich beim Fahrtrichtungs-Geber um einen magnetischen Kompaß, so ist dessen Signal insbesondere in den Städten aufgrund unterschiedlicher elektromagnetischer Störfelder mit einem erheblichen Fehler behaftet, der nur durch zusätzlich aufwendige Maßnahmen, wie beispielsweise Abschirmungen oder Plausibilitätsüberlegungen unter Berücksichtigung des Fahrtweg-Geber-Ausgangssignals eliminiert werden kann.

Ein Beispiel hierfür findet sich in der GB 2 180 066 A, aus der ein Verfahren der eingangs genannten Art hervorgeht, bei dem der Fahrtweg aus den Umdrehungen eines Rads oder zwei Räder, die Fahrtrichtung mit Hilfe eines gesonderten Sensors sowie die absolute Fahrtrichtung mit Hilfe eines Kompaß bestimmt wird. Der Kompaß ist ständig mit seinem Ausgangssignal berücksichtigt mit der angesprochenen Folge eines mitunter erheblichen Fehlers. Darüber hinaus ist der erforderliche konstruktive Aufwand erheblich, da ein oder zwei Fahrtweg-Sensoren sowie ein unabhängiger Fahrtrichtungsgeber erforderlich ist.

Das Problem der Störungen einer Magnetfeldsonde als Kompaß in diesem Zusammenhang sowie die sich bei ständiger Präsenz des Magnetfeldsondensignals ergeben, ist ferner aus der Zeitschrift Bosch Technische Berichte (1986/-) 1/2 Seite 7 ff. bekannt. Aus dieser Druckschrift geht auch die Verwendung zweier gleichartiger Umdrehungs-Sensoren an den beiden Rädern einer Achse als Fahrtweggeber hervor.

Der Erfindung liegt die Aufgabe zugrunde, ein Verfahren der eingangs genannten Art zu schaffen, das mit geringem Aufwand ein Höchstmaß an Genauigkeit liefert.

Die Erfindung löst diese Aufgabe durch die Merkmale des Patentanspruchs 1.

Im Gegensatz zu den bekannten Verfahren ist nunmehr eine deutliche Gewichtsverschiebung zugunsten des Fahrtweg-Gebers vorgenommen. Unter der Annahme, daß dessen Ausgangssignal relativ genau ist, kann bei Gestaltung dieses Gebers in der erfindungsgemäßen Weise mit Hilfe von zwei Radumdrehungs-Sensoren daraus auch eine genaue Information über die jeweilige Fahrtrichtung abgeleitet werden. Ein weiterer Fahrtrichtungs-Geber dient lediglich dazu, das Ausgangssignal des primären Fahrtrichtungs-Gebers (= Radumdrehungs-Sensoren) fallweise zu korrigieren. Daraus ergibt sich, daß das Ausgangssignal des primären Fahrtrichtungs-Gebers unter der Annahme eines fehlerfreien Fahrtweg-Gebers ebenfalls praktisch fehlerfrei ist und somit der Rechenaufwand deutlich verringert und die Genauigkeit deutlich erhöht werden kann.

Der erforderliche konstruktive Aufwand läßt sich insbesondere dann besonders gering halten, wenn ohnehin bereits Radumdrehungs-Sensoren vorhanden sind. Dies ist dann der Fall, wenn das Fahrzeug mit einem Antiblockier- und/oder Antriebsschlupf-Regelsystem ausgestattet ist. In diesen Fällen können die vorhandenen Radumdrehungs-Sensoren auch verwendet werden, um Informationen über Fahrtrichtung und Fahrtweg für die erfindungsgemäße Anzeigeeinrichtung zu liefern.

Der weitere Fahrtrichtungs-Geber kann mit relativ geringen Anforderungen an seine Fehlerfreiheit beispielsweise ein bereits bekannter Kompaß sein. In jedem Fall ist dafür Sorge zu tragen, daß der weitere Fahrtrichtungs-Geber dann wirksam ist, wenn der primäre Fahrtrichtungs-Geber in Form der beiden Radumdrehungs-Sensoren unzureichend ist bzw. fehlerbehaftet arbeitet. Dies ist dann der Fall, wenn das Antiblockier- und/oder Antriebsschlupf-Regelsystem in Funktion tritt, da dann ein wenn auch geringer Schlupf und damit Informationsverlust für die Fahrzeugpositions-Anzeigeeinrichtung auftreten kann.

Weiter kann der weitere Fahrtrichtungs-Geber dann in Funktion treten, wenn das Fahrzeug in den Kreuzungsbereich einer unterlegten Straßenkarte einfährt. Er kann dann solange in Tätigkeit bleiben, bis das Fahrzeug diesen Kreuzungsbereich wieder verläßt bzw. die gewählte Fahrtrichtung, beispielsweise durch Vergleich mit der unterlegten Straßenkarte, zweifelsfrei feststeht.

Durch die Verwendung des weiteren Fahrtrichtungs-Gebers läßt sich auch eine Adaption der Anzeigeeinrichtung für anormale- Betriebsfälle erreichen. Dies gilt beispielsweise dann, wenn die beiden Radumdrehungs-Sensoren aufgrund unterschiedlichen Reifendrucks oder aufgrund eines systematischen Fehlers oder dgl. ein ungleichförmiges Ausgangssignal liefern.

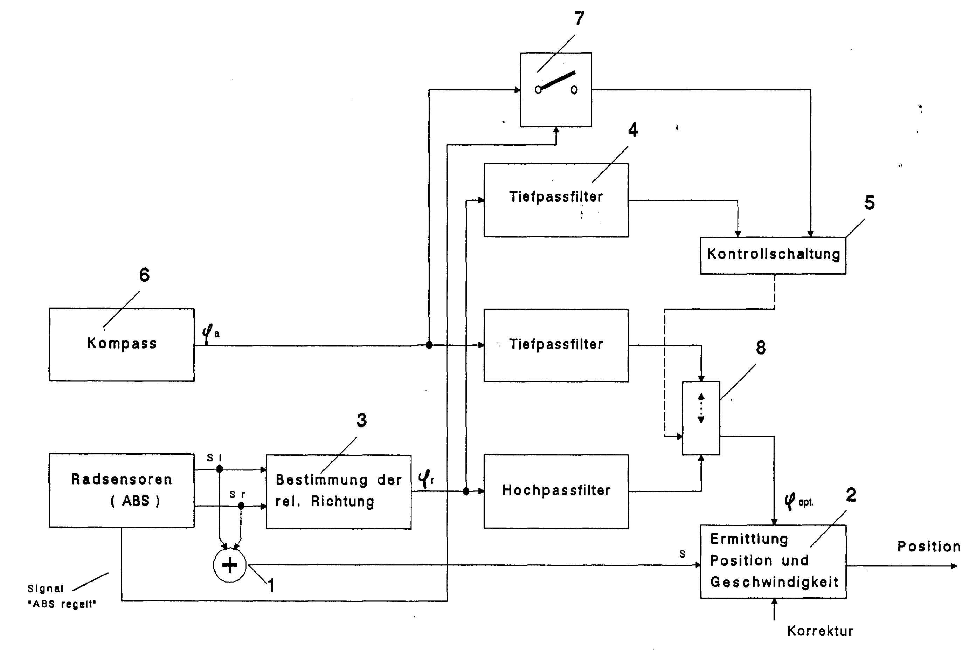

Die Erfindung ist anhand der Zeichnung weiter erläutert. In dieser ist eine Schaltanordnung für eine nicht im einzelnen gezeigte Fahrzeugpositions-Anzeigeeinrichtung dargestellt.

Die Schaltanordnung enthält zwei nicht im einzelnen gezeigte Rad-Umdrehungs-Sensoren, die an den beiden Hinterrädern (nicht dargestellt) eines Kraftfahrzeugs angeordnet sind und ein Ausgangssignal sₗ bzw. sᵣ für die mit dem linken und dem rechten Fahrzeugrad zurückgelegte Wegstrecke liefern. Die beiden Ausgangssignale sₗ und sᵣ sind über ein Additionsglied 1 addiert und einer Fahrzeugpositions-Anzeigesteuerung 2 zugeführt. Die Fahrzeugpositions-Anzeigesteuerung 2 steuert eine nicht im einzelnen gezeigte Anzeigeeinrichtung, bei der es sich beispielsweise um eine Landkarte mit einem darauf beweglichen Leuchtpunkt für die aktuelle Position des Kraftfahrzeugs handelt. Die Ausgangssignale sₗ und sᵣ sind ferner einer Fahrtrichtungs-Bestimmungsschaltung 3 zugeführt, die aus dem Unterschied der beiden Signale sₗ und sᵣ die Abweichung des Kraftfahrzeugs von einer angenommenen geraden Richtung bestimmt. Das Ausgangssignal der Bestimmungsschaltung 3 ist über ein Tiefpaßfilter 4 einer Steuerschaltung 5 zugeführt, die ferner das Ausgangssignal eines weiteren Fahrtrichtungsgebers 6 erhält. Der weitere Fahrtrichtungsgeber, bei dem es sich beispielsweise um einen Kompaß handelt, ist über einen Schalter 7 nur kurzzeitig und bedarfsweise wirksam.

Die Einschaltung des weiteren Fahrtrichtungs-Gebers 6 erfolgt nur zu Justierzwecken bzw. dann, wenn die Bestimmungsschaltung 3 mit einer gewissen Wahrscheinlichkeit ein unzureichendes Ausgangssignal liefert. Letzteres ist beispielsweise dann der Fall, wenn eine nicht im einzelnen dargestellte Antiblockier-Regelschaltung, die ebenfalls das Ausgangssignal der beiden Rad-Umdrehungs-Sensoren auswertet, die Gefahr eines Blockierens anzeigt und einen Regelvorgang auslöst. Während dieses Regelvorgangs ist die Bestimmungsschaltung 3 unwirksam und ausschließlich der Kompaß 6 wirksam. Dasselbe gilt, wenn ein ebenfalls nicht dargestelltes Antriebsschlupf-Regelsystem in Tätigkeit ist und das Antriebsmoment der Brennkraftmaschine bzw. die Bremskraft an den beiden Hinterrädern bzw. den anderen Rädern des Kraftfahrzeugs zur Schlupfvermeidung beeinflußt.

Ebenfalls wirksam ist dieser Kompaß zu Justierzwecken. Es ist beispielsweise bei Inbetriebnahme des Kraftfahrzeugs zur erstmaligen Bestimmung der jeweiligen Fahrtrichtung oder im Kreuzungsbereich einer der Anzeigeeinrichtung unterlegten Straßen- bzw. Landkarte der Fall. Auch dort ist zur Erhöhung der Genauigkeit der Kompaß wirksam. Dies kann allerdings zusammen mit der Bestimmungsschaltung 3 erfolgen, die zusammen mit dem Kompaß 6 ein Wichtungspotentiometer 8 beeinflußt. Im Bedarfsfall wird das Gewicht der Fahrtrichtungsbestimmung zugunsten des Kompaß 6 verschoben. Durch den Vergleich der mit dem Kompaß und der Bestimmungsschaltung 3 gelieferten Information über die jeweilige Fahrtrichtung läßt sich eine präzise Information über die tatsächliche Fahrtrichtung gewinnen. Die Verwendung der beiden Ausgangssignale sₗ und sᵣ in der Regel, d. h. bei ausgeschaltetem Kompaß 6 führt darüber hinaus zu einer präzisen Information über die jeweilige Fahrtrichtung auch während des übrigen Teils der Fahrtroute.

Damit wird durch die erfindungsgemäße Verschiebung der Wertigkeit der zugrundegelegten Fahrtrichtungs-Information zugunsten der mit den beiden Rad-Umdrehungs-Sensoren gelieferten Ausgangssignale sₗ und sᵣ eine genaue Information über die jeweilige Fahrtroute erreicht und Fehler, die durch äußere Einflüsse insbesondere auf den Kompaß 6 eintreten, weitgehend vermieden.

## Patentansprüche

1. Verfahren zum Steuern einer Fahrzeugpositions-Anzeigeeinrichtung mit einem Fahrtweg-Geber, einem Fahrtrichtungs-Geber und einer Recheneinheit, die auf der Grundlage der beiden Geber und unter Zugrundelegung einer Straßenkarte eine die jeweilige Fahrtroute betreffende Information ausgibt, dadurch gekennzeichnet, daß die Anzeigeeinrichtung durch zwei gleichartige Umdrehungs-Sensoren an den beiden Rädern einer Achse als Fahrtweg- und als Fahrtrichtung-Geber gesteuert wird und daß ein weiterer Fahrtrichtungs-Geber zu Justierzwecken kurzzeitig dann berücksichtigt wird, wenn das Fahrzeug in einen Kreuzungsbereich der unterlegten Straßenkarte einfährt.

2. Verfahren nach Anspruch 1, dadurch gekennzeichnet, daß der weitere Fahrtrichtungs-Geber ein Kompaß ist.

3. Verfahren nach Anspruch 1 oder 2, dadurch gekennzeichnet, daß die Umdrehungs-Sensoren Teil eines Antiblockier- und/oder Antriebsschlupf-Regelsystems sind.

4. Verfahren nach Anspruch 3,dadurch gekennzeichnet, daß die Umdrehungs-Sensoren bei Regeltätigkeit des Regelsystems unwirksam und der weitere Fahrtrichtungs-Geber wirksam wird.

## Claims

1. A method of actuating a vehicle position display device comprising a distance-travelled indicator , a direction-of-travel indicator and a computer unit which, using the two indicators and a road map, delivers information relating to the route, characterised in that the display device is actuated by a distance-travelled indicator and a direction-of-travel indicator in the form of two similar revolution sensors on the two wheels on one axle, and an additional distance-of-travel indicator is briefly considered for adjustment purposes when the vehicle enters an intersection region of the road map.

2. A method according to claim 1, characterised in that the additional direction indicator is a compass.

3. A method according to claim 1 or 2, characterised in that the revolution sensors are part of an anti-lock and/or drive-slip regulating system.

4. A method according to claim 2, characterised in that when the regulating system is operative, the rotation sensors are inoperative and the additional direction indicator is operative.

## Revendications

1. Procédé de commande d'un dispositif d'affichage de la position d'un véhicule à l'aide d'un capteur de trajet, d'un capteur de direction de trajet et d'une unité de calcul, qui sur la base des deux capteurs et à l'aide d'une carte routière émet une information concernant le trajet effectif, procédé caractérisé en ce que le dispositif d'affichage est commandé par deux capteurs de rotation de même type équipant les deux roues d'un essieu et constituant un capteur de trajet et de direction de déplacement et en ce qu'un autre capteur de direction de déplacement est pris en compte pendant une courte période à des fins d'ajustage, lorsque le véhicule arrive dans une zone d'intersection sur la carte routière qui est à la base.

2. Procédé selon la revendication 1, caractérisé en ce que cet autre capteur de direction de déplacement est un compas.

3. Procédé selon la revendication 1 ou 2, caractérisé en ce que les capteurs de rotation font partie d'un système de régulation anti-blocage et/ou anti-patinage.

4. Procédé selon la revendication 3, caractérisé en ce que les capteurs de rotation n'agissent pas lorsque le système de régulation fonctionne et l'autre capteur de direction de trajet agit.
